# EUROPÄISCHE PATENTANMELDUNG

(11) **EP 1 318 624 A1**
(43) Veröffentlichungstag der Anmeldung: **11.06.2003**
(21) Anmeldenummer: 01811179.9
(22) Anmeldetag: 04.12.2001
(51) Int. Cl.: H04H 9/00, H04B 17/00, H04Q 7/34

(54) **Datenerfassungssystem und Mobilendgerät**

(71) Anmelder: Nagra-Futuris SA, 2000 Neuchâtel (CH)
(72) Erfinder: Becker, Beat, 5417 Untersiggenthal (CH); Rüegg, Alexander, 5413 Birmenstorf (CH); Ritter, Rudolf, 3052 Zollikofen (CH)
(74) Vertreter: BOVARD AG - Patentanwälte

(57) **Zusammenfassung**

Ein Datenerfassungssystem umfasst mehrere Mobilendgeräte (2), die jeweils einen Rundfunkempfänger (21) zum Empfangen von Rundfunksignalen, die von einem Rundfunksender (13) unidirektional über eine Luftschnittstelle (12) ausgesendet werden, und ein Mobilfunkmodul (22) zur Kommunikation über ein Mobilfunknetz (3) umfassen. Die Mobilendgeräte (2) umfassen zudem jeweils Mittel zur Bereitstellung von Datenbelegen, deren Inhalte abhängig von den empfangenen Rundfunksignalen sind und beispielsweise Angaben über die Signalqualität der empfangenen Rundfunksignale umfassen. Das Datenerfassungssystem umfasst einen mit dem Mobilfunknetz (3) verbundenen Datenspeicher (5). Die bereitgestellten Datenbelege werden von den Mobilendgeräten (2) mittels der Mobilfunkmodule (22) über das Mobilfunknetz (3) an den Datenspeicher (5) übermittelt und dort gespeichert.

## Beschreibung

### Technisches Gebiet

Die vorliegende Erfindung betrifft ein Datenerfassungssystem und ein Mobilendgerät. Die Erfindung betrifft insbesondere ein Mobilendgerät, das einen Rundfunkempfänger zum Empfangen von Rundfunksignalen, die von einem Rundfunksender unidirektional über eine Luftschnittstelle ausgesendet werden, und ein Mobilfunkmodul zur Kommunikation über ein Mobilfunknetz umfasst, sowie ein Datenerfassungssystem, das mehrere dieser Mobilendgeräte umfasst.

### Stand der Technik

Rundfunksysteme mit Rundfunksendern, die Rundfunksignale unidirektional über eine Luftschnittstelle aussenden, beispielsweise Radio- oder Fernsehsender, verfügen selber über keinen Rückkanal. Um Daten über Programm- und/oder Empfangsqualität der Rundfunksysteme zu erhalten, müssen separate Kommunikationskanäle verwendet werden. Für die Bestimmung der Empfangsqualität, respektive der Signalqualität des Rundfunksignals, werden üblicherweise vom Betreiber eines Rundfunksenders spezielle, mobile Messstationen eingesetzt, die an verschiedenen Stellen im Sendegebiet des Rundfunksenders die empfangenen Rundfunksignale messen und Messwerte für die spätere Auswertung auf einem Datenträger aufzeichnen. Für die Bestimmung der kommerziellen Programmqualität respektive der von Benutzern eingeschalteten Programme und der diesbezüglichen Einschaltquoten, werden üblicherweise die Meinungen von Konsumenten (Fernsehzuschauer oder Radiohörer) schriftlich, telefonisch oder mittels spezieller Datenerfassungsgeräte erfasst. Die Datenerfassungsgeräte speichern eingegebene Daten auf einen Datenträger oder übermitteln sie über das öffentliche geschaltete Telefonnetz an eine Auswertzentrale.

In der veröffentlichten Patentanmeldung WO 01/43364 wird ein interaktives Mediensystem beschrieben, in welchem Radiohörer oder Fernsehzuschauer (Benutzer) mittels Mobilendgeräten Benutzerinstruktionen an eine Zentrale übermitteln können. Die Mobilendgeräte gemäss WO 01/43364 umfassen einen Rundfunkempfänger, einen GPS-Empfänger (Global Positioning System) und einen drahtlosen Sender. Die Benutzerinstruktionen werden gemäss WO 01/43364 zusammen mit der aktuellen geografischen Position, der momentan eingestellten Frequenz des Rundfunkempfängers, aktuellen Zeitangaben und einer Benutzeridentifizierung an die Zentrale übermittelt, nachdem der Benutzer einen bestimmten Steuerknopf des Mobilendgeräts betätigt hat. Gemäss WO 01/43364 wird in der Zentrale auf Grund der empfangenen Informationen das betreffende Rundfunkprogramm identifiziert, das vom Benutzer gehört respektive gesehen wird. Gemäss WO 01/43364 bezieht die Zentrale aus einer Datenbank Informationen betreffend das identifizierte Rundfunkprogramm und legt diese Informationen im Internet für den späteren Zugriff durch den Benutzer ab. Obwohl das Mobilendgerät im System gemäss WO 01/43364 dank dem drahtlosen Sender über einen Rückkanal verfügt, eignet sich das System nicht für die statistische Erfassung von Daten über Programmund/oder Empfangsqualität der Rundfunksysteme, da die Benutzerinstruktionen nur auf Initiative des Benutzers an die Zentrale übertragen werden und da keine differenzierten Aussagen über die Empfangsqualität respektive die Signalqualität des Rundfunksignals gemacht werden können.

### Darstellung der Erfindung

Es ist eine Aufgabe der vorliegenden Erfindung, ein Datenerfassungssystem und ein Mobilendgerät für die Erfassung von Daten für die Ermittlung von Programm- und/oder Empfangsqualität von Rundfunksystemen vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die Erfindung insbesondere dadurch erreicht, dass im Datenerfassungssystem mehrere Mobilendgeräte verwendet werden, die jeweils einen Rundfunkempfänger zum Empfangen von Rundfunksignalen, die von einem Rundfunksender unidirektional über eine Luftschnittstelle ausgesendet werden, und ein Mobilfunkmodul zur Kommunikation über ein Mobilfunknetz umfassen, wobei die Mobilendgeräte jeweils Mittel zur Bereitstellung von Datenbelegen umfassen, deren Inhalte abhängig von den empfangenen Rundfunksignalen sind, dass das System einen mit dem Mobilfunknetz verbundenen Datenspeicher umfasst, und dass die angeführten Mittel so beschaffen sind, dass sie die bereitgestellten Datenbelege dem Mobilfunkmodul zur Übermittlung an den Datenspeicher zuführen. Der Vorteil dieses Datenerfassungssystems besteht insbesondere darin, dass von empfangenen Rundfunksignalen abhängige Daten an mehreren geografischen Orten durch mehrere Mobilendgeräte, die von verschiedenen Benutzern betrieben werden, erfasst und in einem zentralisierten Datenspeicher gesammelt werden können. Dadurch ergibt sich eine sowohl geografisch als auch hinsichtlich Benutzertypen statistisch verteilte Datenerfassung. Dies wiederum bewirkt, dass die Rundfunksignale von mehreren verschiedenen vorhandenen Rundfunksendern erfasst werden.

Die Mobilendgeräte umfassen vorzugsweise jeweils ein Qualitätsbestimmungsmodul zum Bestimmen der Signalqualität der vom Rundfunksender empfangenen Rundfunksignale und die angeführten Mittel sind vorzugsweise so beschaffen, dass sie Angaben über die bestimmte Rundfunk-Signalqualität als Datenelemente in die Datenbelege einfügen. Das Qualitätsbestimmungsmodul umfasst vorzugsweise ein Feldstärkemessmodul zum Messen der Feldstärke der vom Rundfunksender empfangenen Rundfunksignale. Dadurch kann die Rundfunk-Signalqualität, insbesondere der Rundfunk-Feldstärkewert, von empfangenen Rundfunksignalen, die gegebenenfalls von mehreren verschiedenen Rundfunksendern ausgesendet werden, durch mehrere Mobilendgeräte an mehreren verschiedenen geografischen Positionen bestimmt und im zentralen Datenspeicher gesammelt werden.

Vorzugsweise umfassen die Mobilendgeräte jeweils ein Positionsbestimmungsmodul zum Bestimmen der aktuellen geografischen Position des Mobilendgeräts, und die angeführten Mittel sind vorzugsweise so beschaffen, dass sie die bestimmte aktuelle geografische Position als Datenelement in die Datenbelege einfügen. Durch die Verknüpfung der aktuellen geografischen Position mit den anderen für diese betreffende Position bestimmten Daten, respektive Datenelementen, können die im Datenspeicher gesammelten Daten geografisch, das heisst hinsichtlich deren örtlichen Verteilung, ausgewertet werden. Die Bestimmung der aktuellen geografischen Position des Mobilendgeräts durch ein Positionsbestimmungsmodul in den Mobilendgeräten hat den Vorteil, dass das vorgeschlagene Datenerfassungssystem ohne die Aufenthaltsinformationen der Mobilendgeräte auskommt, die durch die Infrastruktur des Mobilfunknetzes bestimmt und gespeichert werden, die oft nicht sehr genau sind und die in gewissen Ländern dem Vertraulichkeitsschutz unterstellt sind.

In einer bevorzugten Ausführungsvariante umfassen die Mobilendgeräte jeweils einen mit dem Rundfunkempfänger verbundenen Decoder zum Gewinnen von in den vom Rundfunksender empfangenen Rundfunksignalen enthaltenen Rundfunkdaten und die angeführten Mittel sind so beschaffen, dass sie gewisse der gewonnenen Rundfunkdaten, insbesondere eine darin enthaltene Rundfunksenderidentifizierung, als Datenelemente in die Datenbelege einfügen. Rundfunkdaten, die von Rundfunksendern ausgesendet werden, umfassen einerseits programmbegleitende Daten mit Bezug zu den betreffenden Programmen (Program Associated Data, PAD) oder ohne Bezug zu den Programmen (Non Program Associated Data, NPAD), beispielsweise in RDS-(Radio Data System), DAB- (Digital Audio Broadcasting), DVB- (Digital Video Broadcasting) oder DRM-Rundfunksystemen (Digital Radio Mondiale) und andererseits digitale Audio- (Radioprogramme) oder Video-Programme (Fernsehprogramme) in digitalen Rundfunksystemen wie DAB, DRM oder DVB. Die Sammlung von in den Rundfunkdaten enthaltenen Inhaltsangaben, die das ausgesendete Programm identifizieren, ermöglicht die statistische Auswertung der im zentralen Datenspeicher gespeicherten Daten hinsichtlich Einschaltquoten und Einschaltzeiten der gehörten respektive betrachteten Radio- und Fernsehprogramme. Auf Grund der Rundfunksenderidentifizierung, die beispielsweise auch eine Identifizierung des Programmanbieters enthalten kann, können die statistischen Auswertungen einerseits sender- und/oder anbieterspezifisch erfolgen und andererseits deren Resultate den betreffenden Sendern und Anbietern übermittelt werden.

In einer Ausführungsvariante umfassen die Mobilendgeräte jeweils ein mit dem Decoder verbundenes Fehlerbestimmungsmodul zum Bestimmen der Bitfehlerrate des vom Rundfunksender empfangenen Rundfunksignals und die angeführten Mittel sind so beschaffen, dass sie die bestimmte Rundfunk-Bitfehlerrate als Datenelement in die Datenbelege einfügen. Dadurch kann für digitale Rundfunksysteme ein weiteres Qualitätskriterium zur Beurteilung der Signalqualität von empfangenen Rundfunksignalen erfasst werden.

In einer Ausführungsvariante umfassen die Mobilendgeräte jeweils ein Qualitätsbestimmungsmodul zum Bestimmen der Signalqualität der von Basisstationen des Mobilfunknetzes empfangenen Mobilfunksignale und die angeführten Mittel sind so beschaffen, dass sie Angaben über die bestimmte Mobilfunk-Signalqualität als Datenelemente in die Datenbelege einfügen. Das Qualitätsbestimmungsmodul umfasst vorzugsweise ein Feldstärkemessmodul zum Messen der von Basisstationen des Mobilfunknetzes empfangenen Mobilfunksignale und/oder ein Fehlerbestimmungsmodul zum Bestimmen der Bitfehlerrate der empfangenen Mobilfunksignale. Dadurch kann die Mobilfunk-Signalqualität, insbesondere der Mobilfunk-Feldstärkewert und/oder die Mobilfunk-Bitfehlerrate, von empfangenen Mobilfunksignalen durch mehrere Mobilendgeräte an mehreren verschiedenen geografischen Positionen bestimmt und im zentralen Datenspeicher gesammelt werden. Durch die (kombinierte) Bestimmung der Signalqualität sowohl von empfangenen Rundfunksignalen als auch von empfangenen Mobilfunksignalen kann die Empfangsqualität von Funksignalen des Rundfunksenders und die Empfangsqualität von Funksignalen des Mobilfunknetzes an mehreren geografischen Positionen statistisch ausgewertet und verglichen werden. Diese Vergleichsmöglichkeit ist insbesondere vorteilhaft für die Abstimmung von Mobilfunknetzen und Rundfunksendern in Gebieten, wo sich deren Sendebereiche für den Einsatz von Kombinationsendgeräten, die sowohl einen Rundfunkempfänger als auch ein Mobilfunkmodul umfassen, überdecken müssen. Mit der Abstimmung soll in solchen Gebieten erreicht werden, dass sowohl die Signalqualität von empfangenen Rundfunksignalen als auch die Signalqualität von empfangenen Mobilfunksignalen genügend hoch ist, um Kombinationsanwendungen zu ermöglichen, in denen sowohl die Dienste des Rundfunksenders als auch die Dienste des Mobilfunknetzes verwendet werden und folglich der Rundfunkempfänger und das Mobilfunkmodul kombiniert eingesetzt werden.

In einer Ausführungsvariante umfassen die Mobilendgeräte jeweils ein Identifizierungsmodul mit einem darin gespeicherten Identifizierungsdatenelement und die angeführten Mittel sind so beschaffen, dass sie das Identifizierungsdatenelement in die Datenbelege einfügen. Dadurch lässt sich das betreffende Mobilendgerät und/oder der betreffende Benutzer, von denen die Datenbelege übermittelt wurden, im zentralen Datenspeicher identifizieren und es können beispielsweise Belohnungen gutgeschrieben oder übermittelt werden, beispielsweise ein bestimmter Wert zum freien Bezug von kostenpflichtigen Dienstleistungen. Zudem ermöglicht die Benutzeridentifizierung eine demographische Auswertung der im Datenspeicher gesammelten Daten, insbesondere der Identifizierungen und Inhaltsangaben von Radio- und Fernsehprogrammen, das heisst sie können hinsichtlich Altersgruppen, Geschlecht oder sozialen Schichten der Zuhörer respektive Zuschauer ausgewertet werden.

Vorzugsweise sind die angeführten Mittel so beschaffen, dass sie Datenelemente, deren Werte zum gleichen Zeitpunkt bestimmt werden, einander zugeordnet in die genannten Datenbelege einfügen. Dadurch können die Angaben über die bestimmte Rundfunk-Signalqualität, die Angaben über die bestimmte Mobilfunk-Signalqualität, die aktuelle geografische Position und/oder die gewonnenen Rundfunkdaten, die gleichzeitig bestimmt werden, im Datenspeicher einander zugeordnet werden. Durch Bestimmung und Zuordnung einer Zeitangabe, beispielsweise die Tageszeit und das Datum zu den Datenelementen, können mehrere Datensätze dieser Datenelemente in einen gemeinsamen Datenbeleg eingefügt und vom Mobilendgerät gleichzeitig zur Speicherung an den Datenspeicher übermittelt werden.

### Kurze Beschreibung der Zeichnungen

Nachfolgend wird eine Ausführung der vorliegenden Erfindung anhand eines Beispieles beschrieben. Das Beispiel der Ausführung wird durch die folgende einzige beigelegte Figur illustriert:

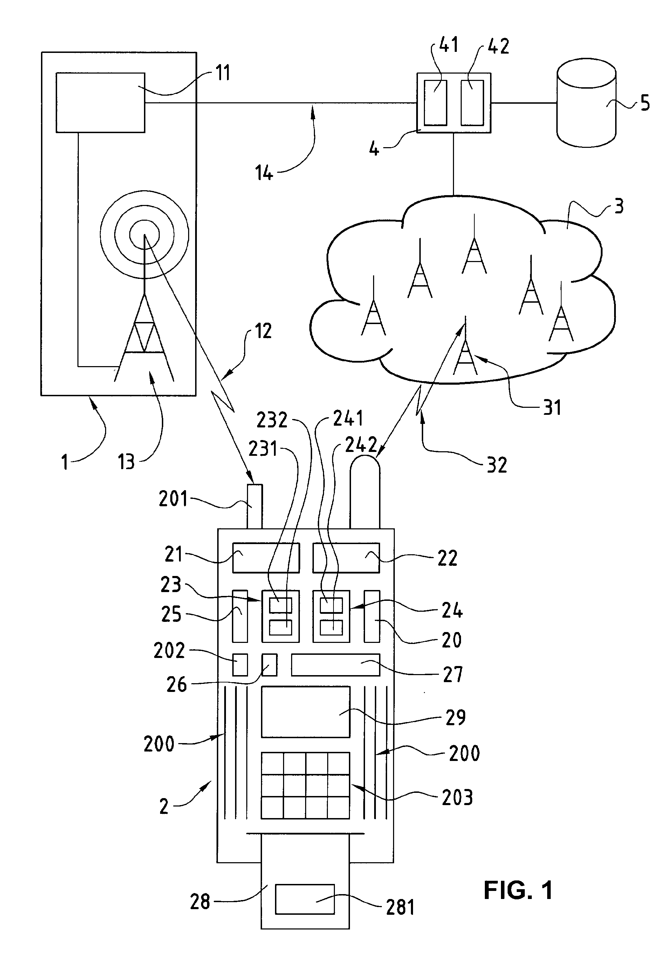

Figur 1 zeigt ein Blockdiagramm, welches schematisch ein Mobilendgerät illustriert, das mittels eines Rundfunkempfängers Rundfunksignale von einem Rundfunksender empfängt und mittels eines Mobilfunkmoduls Datenbelege über ein Mobilfunknetz zur Speicherung an einen Datenspeicher überträgt.

### Wege zur Ausführung der Erfindung

In der Figur 1 bezieht sich das Bezugszeichen 1 auf ein Rundfunksystem, das einen Rundfunksender 13 zum unidirektionalen Aussenden von Rundfunksignalen über eine Luftschnittstelle 12 umfasst, beispielsweise ein RDS-, DAB-, DVB- oder DRM-Rundfunksystem oder ein anderes Rundfunksystem, z.B. ein satellitenbasiertes Rundfunksystem. Die Rundfunksignale entsprechen Radio- und/oder Fernsehprogrammen, die beispielsweise (digitale) Rundfunkdaten wie Audioprogramme, Video-Programme oder programmbegleitende Daten mit oder ohne Bezug zu den betreffenden Programmen (PAD respektive NPAD) umfassen.

Der Rundfunksender 13 ist mit einer Datenverarbeitungsvorrichtung 11 verbunden, die mindestens einen Computer umfasst und für die Bereitstellung der Sendeinhalte, das heisst der zu übertragenden Fernseh- und/oder Radioprogramme, insbesondere der Rundfunkdaten und den darin enthaltenen programmbegleitenden Daten, verwendet wird. Die programmbegleitenden Daten werden vorzugsweise gemäss definierten Spezifikationen wie ADM-(Ancillary Data Manager), MOT- (Multimedia Object Transfer) oder ähnlichen Spezifikationen übertragen. Die programmbegleitenden Daten umfassen beispielsweise eine Rundfunksenderidentifizierung, Angaben über die Tageszeit und das Datum, die Positionsdifferenz für DGPS-Anwendungen (Differential Global Positioning System), eine Programmidentifizierung und/oder Inhaltsangaben wie Titel und Künstler eines Musikstücks, die Programmquelle zum Beispiel der Anbieter des betreffenden Programms, Zeitangaben über die Spieldauer und/oder die Start- und Endzeit eines Programmsegments, andere Informationen, zum Beispiel Strassenverkehrsinformationen, oder Softwareprogramme, die auf einem Prozessor ausführbar sind.

Wie in der Figur 1 schematisch dargestellt ist, werden die ausgesendeten Rundfunksignale vom Rundfunkempfänger 21 des Mobilendgeräts 2 mittels einer Empfangsantenne 201 über die Luftschnittstelle 12 empfangen. Nach entsprechender Verarbeitung können die empfangenen Rundfunksignale dem Benutzer des Mobilendgeräts 2 als Radioprogramme, Fernsehprogramme und/oder Daten auf der Anzeige 29 dargestellt respektive über die elektroakustischen Wandler 200 wiedergegeben werden.

Das Mobilendgerät 2 umfasst zudem einen mit dem Rundfunkempfänger 21 verbundenen Decoder 25, der die Rundfunkdaten aus den vom Rundfunksender 13 empfangenen Rundfunksignalen gewinnt. Der Decoder 25 ist mit dem Rundfunkempfänger 21 verbunden, wobei der Decoder 25 und der Rundfunkempfänger 21 zum Beispiel als integrierte Schaltkreise auf separaten Chips oder auf einem oder mehreren gemeinsamen Chips ausgeführt werden.

Das Mobilendgerät 2 umfasst zudem ein mit dem Rundfunkempfänger 21 verbundenes Qualitätsbestimmungsmodul 23, das die Signalqualität der vom Rundfunksender 13 empfangenen Rundfunksignale bestimmt. Für diesen Zweck umfasst das Qualitätsbestimmungsmodul 23 ein Feldstärkemessmodul 231, das die Feldstärke der vom Rundfunksender 13 empfangenen Rundfunksignale misst. Das Feldstärkemessmodul 231 ist mit dem Rundfunkempfänger 21 verbunden und vorzugsweise als integrierter Schaltkreis ausgeführt, beispielsweise zusammen mit dem Rundfunkempfänger 21 auf einem gemeinsamen Chip oder auf einem separaten Chip. Das Qualitätsbestimmungsmodul 23 kann auch ein mit dem Decoder 25 verbundenes Fehlerbestimmungsmodul 232 umfassen, das die Bitfehlerrate des vom Rundfunksender 13 empfangenen Rundfunksignals bestimmt. Das Fehlerbestimmungsmodul 232 ist als integrierter Schaltkreis oder als programmiertes Softwaremodul ausgeführt und befindet sich beispielsweise mit dem Decoder 25 auf einem gemeinsamen Chip.

Wie in der Figur 1 schematisch dargestellt ist, umfasst das Mobilendgerät 2 Positionsbestimmungsmittel 20, beispielsweise einen GPS-Empfänger (Global Positioning System) oder ein programmiertes Softwaremodul, welches einen Prozessor des Mobilendgeräts 2 so steuert, dass er die aktuelle geografische Position des Mobilendgeräts 2 aus der Infrastruktur des Mobilfunknetzes 3 bezieht. Zur genaueren Positionsbestimmung mittels DGPS können die Positionsbestimmungsmittel 20 auch die in den empfangenen Rundfunkdaten enthaltene Positionsdifferenz verwenden.

Das Mobilendgerät 2 umfasst zudem Zeitbestimmungsmittel 26, die die Tageszeit und beispielsweise auch das Datum bestimmen. Die Zeitbestimmungsmittel 26 sind als integrierter Schaltkreis oder als programmiertes Softwaremodul ausgeführt, das einen Prozessor des Mobilendgeräts 2 steuert. Das programmierte Softwaremodul der Zeitbestimmungsmittel 26 entnimmt beispielsweise die Tageszeit und das Datum aus den empfangenen Rundfunkdaten oder aus Daten, die über das Mobilfunknetz 3 empfangen wurden, oder es berechnet diese Werte unter Steuerung eines Taktgebers aus gespeicherten Grundwerten.

Wie in der Figur 1 schematisch dargestellt ist, umfasst das Mobilendgerät 2 zusätzlich ein Mobilfunkmodul 22, insbesondere ein Mobilfunkmodul 22 für die durch den Doppelpfeil 32 angedeutete bidirektionale Kommunikation über das Mobilfunknetz 3, beispielsweise ein GSM- (Global System for Mobile Communication) oder UMTS-Netz (Universal Mobile Telephone System), oder ein anderes beispielsweise satellitenbasiertes Mobilfunknetz. Das Mobilfunkmodul 22 ist als integrierter Schaltkreis ausgeführt, zusammen mit dem Rundfunkempfänger 21 auf einem gemeinsamen Chip oder auf einem oder mehreren separaten Chips.

Das Mobilendgerät 2 umfasst zudem ein mit dem Mobilfunkmodul 22 verbundenes Qualitätsbestimmungsmodul 24, das die Signalqualität der von der Basisstation 31 des Mobilfunknetzes 3 empfangenen Mobilfunksignale bestimmt. Für diesen Zweck umfasst das Qualitätsbestimmungsmodul 24 ein Feldstärkemessmodul 241, das die Feldstärke der von der Basisstation 31 des Mobilfunknetzes 3 empfangenen Mobilfunksignale misst. Das Feldstärkemessmodul 241 ist mit dem Mobilfunkmodul 22 verbunden und vorzugsweise als integrierter Schaltkreis ausgeführt, beispielsweise zusammen mit dem Mobilfunkmodul 22 auf einem gemeinsamen Chip oder auf einem separaten Chip. Das Qualitätsbestimmungsmodul 24 kann auch ein mit dem Mobilfunkmodul 22 verbundenes Fehlerbestimmungsmodul 242 umfassen, das die Bitfehlerrate des von der Basisstation 31 des Mobilfunknetzes 3 empfangenen Mobilfunksignals bestimmt. Das Fehlerbestimmungsmodul 242 ist als integrierter Schaltkreis oder als programmiertes Softwaremodul ausgeführt und befindet sich beispielsweise mit dem Mobilfunkmodul 22 auf einem gemeinsamen Chip.

Insbesondere wenn das Mobilfunkmodul 22 und der Rundfunkempfänger 21 auf einem gemeinsamen Chip ausgeführt sind, können die Qualitätsmodule 23 und 24 in einem einzigen gemeinsamen Qualitätsmodul kombiniert ausgeführt werden.

Das Mobilendgerät 2 umfasst zudem ein Identifizierungsmodul 28, 202 mit einem darin gespeicherten Identifizierungsdatenelement. Das Identifizierungsmodul 202 umfasst ein Datenspeicherelement, welches fest mit dem Mobilendgerät 2 verbunden ist und in welchem das Identifizierungsdatenelement gespeichert ist, oder es ist als Chipkarte 28 ausgeführt, zum Beispiel eine SIM-Karte (Subscriber Identification Module), welche entfernbar mit dem Mobilendgerät 2 verbunden ist und auf welcher das Identifizierungsdatenelement in einem Datenspeicherelement 281 gespeichert ist. Das Identifizierungsdatenelement ist beispielsweise eine Benutzeridentifizierung, zum Beispiel eine IMSI (International Mobile Subscriber Identity) für die Identifizierung des Benutzers im Mobilfunknetz 3, eine Rufnummer (z.B. eine Mobile Subscriber ISDN Nummer, MSIDN), eine eindeutige Gerätenummer (z.B. ein International Mobile Equipment Identifier, IMEI), die schreibgeschützt im Datenspeicherelement 202 gespeichert ist, oder ein anderes betreiberspezifisches Identifizierungsdatenelement oder eine Kombination aus mehreren dieser Datenelemente. Die Benutzeridentifizierung kann auch biometrische Identifizierungsmerkmale umfassen, beispielsweise digitalisierte Fingerabdrücke, Irismuster oder Retinamuster.

Wie in der Figur 1 schematisch dargestellt ist, umfasst das Mobilendgerät 2 Verarbeitungsmittel 27 für die Weiterverarbeitung der von den empfangenen Rundfunksignalen und Mobilfunksignalen abhängigen gewonnen, bestimmten oder gemessenen Datenelemente. Die Verarbeitungsmittel 27 sind beispielsweise als programmiertes Softwaremodul ausgeführt, das einen Prozessor des Mobilendgeräts 2 steuert. Die Verarbeitungsmittel 27 können auch hardwaremässig, insbesondere als integrierte Schaltkreise, ausgeführt sein.

**Tabelle 1**

| | | | | | | | | |
|---|---|---|---|---|---|---|---|---|
| Tageszeit | Datum | Position | Rundfunksenderidentifizierung | RundfunkFeldstärkewert | RundfunkBitfehlerrate | Zelleniden-tifizierung | MobilfunkFeldstärkewert | MobilfunkBitfehlerrate |

Für einen bestimmten Zeitpunkt speichern die Verarbeitungsmittel 27 die zu diesem Zeitpunkt ermittelte Rundfunk-Signalqualität, insbesondere den gemessenen Rundfunk-Feldstärkewert und/oder die bestimmte Rundfunk-Bitfehlerrate, die ermittelte Mobilfunk-Signalqualität, insbesondere den gemessenen Mobilfunk-Feldstärkewert und/oder die bestimmte Mobilfunk-Bitfehlerrate, die Basisstation- oder Zellenidentifizierung, die der Basisstation 31 zugeordnet ist, für die die Mobilfunk-Signalqualität ermittelt wurde, sowie die bestimmte geografische Position. Wenn die aus den Rundfunksignalen gewonnen Rundfunkdaten eine Rundfunksenderidentifizierung enthalten, kann auch die Rundfunksenderidentifizierung des zum betreffenden Zeitpunkt empfangenen Funksenders 13 diesen Datenelementen zugeordnet gespeichert werden, wie in der Tabelle 1 dargestellt ist.

Es können auch weitere Datenelemente durch die Verarbeitungsmittel 27 dem bestimmten Zeitpunkt zugeordnet gespeichert werden, insbesondere können aus den empfangenen Rundfunkdaten entnommene Programmidentifizierungen, Inhaltsangaben und Anbieteridentifizierungen als weitere Datenelemente gespeichert werden.

Der Erfassungszeitpunkt, zu dem die in der Tabelle 1 dargestellten Datenelemente und gegebenenfalls auch weitere Datenelemente im Mobilendgerät 2 bestimmt und gespeichert werden, kann auf verschiedene Weise bestimmt werden. Der Erfassungszeitpunkt kann beispielsweise durch das Einschalten des Mobilendgeräts 2 festgelegt werden, er kann durch Befehlseingabe des Benutzers über die Bedienungselemente 203 festgelegt werden, oder er kann durch Befehlsdaten festgelegt werden, die im Mobilendgerät 2 über die Luftschnittstelle 12 vom Rundfunksender 13 oder über das Mobilfunknetz 3 von der Zentraleinheit 4 empfangen werden. Die Erfassung der Datenelemente kann zum festgelegten Erfassungszeitpunkt einmalig erfolgen oder sie kann ab dem festgelegten Erfassungszeitpunkt mehrmalig, beispielsweise periodisch, erfolgen. Falls nicht alle Datenelemente zum exakt gleichen Zeitpunkt bestimmbar sind, werden diejenigen Datenelemente einander zugeordnet gespeichert, deren Werte innerhalb eines gemeinsamen, definierten Zeitintervalls bestimmt werden.

Die Verarbeitungsmittel 27 fügen die in der Tabelle 1 dargestellten Datenelemente und gegebenenfalls auch weitere Datenelemente in einen Datenbeleg ein und führen den bereitgestellten Datenbeleg dem Mobilfunkmodul 22 zur Übermittlung über das Mobilfunknetz 3 an den Datenspeicher 5 der Zentraleinheit 4 zu. Den Datenbelegen kann durch die Verarbeitungsmittel 27 auch jeweils ein Identifizierungsdatenelement eingefügt werden, das dem oben erwähnten Identifizierungsmodul 28, 202 entnommen wird. Datenbelege können beispielsweise nach jeder Erfassung der Datenelemente bereitgestellt und an die Zentraleinheit 4 übermittelt werden. Falls mehrere der in der Tabelle 1 illustrierten Datensätze, die gegebenenfalls auch weitere Datenelemente umfassen, durch die Verarbeitungsmittel 27 in einer Datentabelle oder in einem Datenfile im Mobilendgerät 2 gespeichert werden, können mehrere solcher Datensätze in einen gemeinsamen Datenbeleg eingefügt und zusammen an die Zentraleinheit 4 übermittelt werden. Der Zeitpunkt für die Übermittlung von Datenbelegen mit mehreren Datensätzen wird beispielsweise durch die Verarbeitungsmittel 27 auf Grund einer definierten Anzahl Datensätze oder einer definierten maximalen Zeitdauer von der Erfassung bis zur Übermittlung festgelegt. Der Zeitpunkt für die Übermittlung von Datenbelegen mit mehreren Datensätzen kann auch durch Befehlsdaten festgelegt werden, die im Mobilendgerät 2 über die Luftschnittstelle 12 vom Rundfunksender 13 oder über das Mobilfunknetz 3 von der Zentraleinheit 4 empfangen werden. Die Übermittlung der Datenbelege kann auch abhängig von einer Erlaubnis des Benutzers des Mobilendgeräts 2 sein, die durch die Verarbeitungsmittel 27 unter Verwendung der Anzeige 29 angefordert und über die Bedienungselemente 203 entgegengenommen wird.

Falls die Zentraleinheit 4 nicht direkt an das Mobilfunknetz 3 angeschlossen, sondern zum Beispiel mit dem Internet 4 verbunden ist, umfasst das Mobilfunkmodul 22 ein Internetmodul, beispielsweise ein WAP-Modul (Wireless Application Protocol), um über das Internet 4 und gegebenenfalls über einen Internet-Gateway auf die Zentraleinheit 4 zuzugreifen.

Die Zentraleinheit 4 umfasst mindestens einen Computer und wird durch eine Server-Identifizierung oder eine Server-Adresse bestimmt, die im Mobilendgerät 2 gespeichert ist und/oder durch die oben genannten Befehlsdaten im Mobilendgerät 2 empfangen wird. In der Zentraleinheit 4 werden die von den Mobilendgeräten 2 übermittelten Datenbelege durch das Kommunikationsmodul 41 entgegengenommen und durch das Dienstmodul 42 bearbeitet, das als programmiertes Softwaremodul ausgeführt ist. Die Zentraleinheit 4 ist mit dem Datenspeicher 5 verbunden. Das Dienstmodul 42 verfügt vorzugsweise über ein Datenbankverwaltungssystem (Database Management System, DBMS), mittels dessen die in den empfangenen Datenbelegen enthaltenen Datensätze, respektive Datenelemente, im Datenspeicher 5 gespeichert und verwaltet werden. Das Dienstmodul 42 umfasst zudem Funktionen für die statistische Auswertung der im Datenspeicher 5 gespeicherten Daten, die von einer Vielzahl von Mobilendgeräten 2 gesammelt werden. Es kann beispielsweise bestimmt werden, welche Radio- und/oder Fernsehprogramme von welchen Rundfunksendern, von welchen Bevölkerungsgruppen, wo, wann und wie lange gehört respektive geschaut werden. Im Detail kann bestimmt werden, welcher Rundfunksender und welches Radio- oder Fernsehprogramm wie oft eingeschaltet respektive ausgeschaltet wird (beim Ein- respektive Ausschalten des Mobilendgeräts 2), von welchen Rundfunksendern und von welchen Radiooder Fernsehprogrammen wie oft auf andere Rundfunksender und Radio- oder Fernsehprogramme umgeschaltet wird (bei ein- respektive ausgeschaltetem Mobilendgerät 2), und auf welche Rundfunksender und Radio- oder Fernsehprogramme von anderen Rundfunksendern und Radio- oder Fernsehprogrammen wie oft umgeschaltet wird. Es kann auch die Anzahl kurzfristiger "Besucher" ermittelt werden, die einen bestimmten Rundfunksender und ein bestimmtes Radio- oder Fernsehprogramm nur für eine vordefinierte Zeitdauer eingeschaltet haben, beispielsweise fünf Minuten. Es kann auch bestimmt werden, wie hoch die Signalqualität der empfangenen Rundfunk- und Mobilfunksignale an welchen Orten und zu welchen Zeitpunkten ist. Durch Berücksichtigung der Rundfunk-Signalqualität zum Zeitpunkt des Aus- oder Umschaltens kann auch hergeleitet werden, ob der Hörer oder Zuschauer durch den Inhalt oder die schlechte Empfangsqualität zum Ein- oder Umschalten bewogen wurde.

Die Zentraleinheit 4 kann über eine Kommunikationsverbindung 14 mit dem Rundfunksystem 1 verbunden sein. Die Kommunikationsverbindung 14 ist beispielsweise eine Internet-Verbindung oder eine andere Festnetzverbindung. Eine entsprechende Kommunikationsverbindung kann auch zwischen der Zentraleinheit 4 und dem Betreiber des Mobilfunknetzes 3, respektive der Basisstationen 31, bestehen. Gesammelte Daten, Auswertungen und gegebenenfalls Befehlsdaten, die den Rundfunksender 13 betreffen, können von der Zentraleinheit 4 mittels des Kommunikationsmoduls 41 an die Datenverarbeitungsvorrichtung 11 des Rundfunksystems 1 übermittelt werden. Die gesammelten Daten, Auswertungen und gegebenenfalls Befehlsdaten, die das Mobilfunknetz 3, respektive die Basisstation(en) 31 betreffen, können von der Zentraleinheit 4 mittels des Kommunikationsmoduls 41 an den Betreiber des Mobilfunknetzes 3, respektive der Basisstationen 31, übermittelt werden. Die Übermittlung der erfassten und ausgewerteten Rundfunk- und Mobilfunk-Signalqualität an das Rundfunksystem 1 und an den Betreiber des Mobilfunknetzes 3, respektive der Basisstationen 31, ermöglicht die individuelle und/oder kombinierte Abstimmung der Sendeleistungen des Mobilfunknetzes 3, respektive der Basisstation 31, und des Rundfunksenders 13.

Das Dienstmodul 42 kann zudem über Funktionen verfügen, um auf Grund von empfangenen Identifizierungsdatenelementen den betreffenden Benutzern für die Übermittlung der Datenbelege Belohnungen gutzuschreiben. Die Belohnung erfolgt beispielsweise durch Übermittlung von Guthaben zum Mobilendgerät 2, beispielsweise ein bestimmter Wert zum freien Bezug von kostenpflichtigen Dienstleistungen, zum Beispiel der Bezug von zugriffskontrollierten Radioprogrammen, Fernsehprogrammen, Datendiensten oder Diensten im Mobilfunknetz 3.

### Gewerbliche Anwendbarkeit

Die vorliegende Erfindung ermöglicht insbesondere, die Qualität von Rundfunksignalen, die von Rundfunksendern empfangen werden, und die Qualität von Mobilfunksignalen, die von Basisstationen von Mobilfunknetzen empfangen werden, ortsaufgelöst zu erfassen und miteinander zu vergleichen. Die vorliegende Erfindung ermöglicht die ortsaufgelöste Erfassung der Signalqualität von Rundfunksendern und Mobilfunknetzen unter Verwendung der Mobilendgeräte der Zuhörer, Zuschauer und Teilnehmer ohne notwendigen Einsatz von speziellen stationären oder mobilen Messstationen.

### Legende der Bezugszeichen

- 1: Rundfunksystem
- 2: Mobilendgerät
- 3: Mobilfunknetz
- 4: Zentraleinheit
- 5: Datenspeicher
- 11: Datenverarbeitungsvorrichtung
- 12: Luftschnittstelle
- 13: Rundfunksender
- 14: Kommunikationsverbindung
- 20: Positionsbestimmungsmittel
- 21: Rundfunkempfänger
- 22: Mobilfunkmodul
- 23, 24: Qualitätsbestimmungsmodul
- 25: Decoder
- 26: Zeitbestimmungsmittel
- 27: Verarbeitungsmittel
- 28: Identifizierungsmodul
- 29: Anzeige
- 31: Basisstation
- 32: Doppelpfeil
- 41: Kommunikationsmodul
- 42: Dienstmodul
- 200: Elektroakustische Wandler
- 201: Empfangsantenne
- 202: Identifizierungsmodul
- 203: Bedienungselemente
- 231, 241: Feldstärkemessmodul
- 232, 242: Fehlerbestimmungsmodul
- 281: Datenspeicherelement

## Patentansprüche

1. Datenerfassungssystem, das mehrere Mobilendgeräte (2) umfasst, die jeweils einen Rundfunkempfänger (21) zum Empfangen von Rundfunksignalen, die von einem Rundfunksender (13) unidirektional über eine Luftschnittstelle (12) ausgesendet werden, und ein Mobilfunkmodul (22) zur Kommunikation über ein Mobilfunknetz (3) umfassen, **dadurch gekennzeichnet,**
**dass** die Mobilendgeräte (2) jeweils Mittel zur Bereitstellung von Datenbelegen, deren Inhalte abhängig von den empfangenen Rundfunksignalen sind, umfassen,
**dass** das System einen mit dem Mobilfunknetz (3) verbundenen Datenspeicher (5) umfasst, und
**dass** die genannten Mittel so beschaffen sind, dass sie die bereitgestellten Datenbelege dem Mobilfunkmodul (22) zur Übermittlung an den Datenspeicher (5) zuführen.

2. System gemäss Anspruch 1, **dadurch gekennzeichnet, dass** die Mobilendgeräte (2) jeweils ein Qualitätsbestimmungsmodul (23) zum Bestimmen der Signalqualität der vom Rundfunksender (13) empfangenen Rundfunksignale umfassen, und dass die genannten Mittel so beschaffen sind, dass sie Angaben über die bestimmte Rundfunk-Signalqualität als Datenelemente in die genannten Datenbelege einfügen.

3. System gemäss einem der Ansprüche 1 oder 2, **dadurch gekennzeichnet, dass** die Mobilendgeräte (2) jeweils ein Feldstärkemessmodul (231) zum Messen der Feldstärke der vom Rundfunksender (13) empfangenen Rundfunksignale umfassen, und dass die genannten Mittel so beschaffen sind, dass sie gemessene Rundfunk-Feldstärkewerte als Datenelemente in die genannten Datenbelege einfügen.

4. System gemäss einem der Ansprüche 1 bis 3, **dadurch gekennzeichnet, dass** die Mobilendgeräte (2) jeweils ein Positionsbestimmungsmodul (20) zum Bestimmen der aktuellen geografischen Position des Mobilendgeräts (2) umfassen, und dass die genannten Mittel so beschaffen sind, dass sie die bestimmte aktuelle geografische Position als Datenelement in die genannten Datenbelege einfügen.

5. System gemäss einem der Ansprüche 1 bis 4, **dadurch gekennzeichnet, dass** die Mobilendgeräte (2) jeweils einen mit dem Rundfunkempfänger (21) verbundenen Decoder (25) zum Gewinnen von in den vom Rundfunksender (13) empfangenen Rundfunksignalen enthaltenen Rundfunkdaten umfassen, und dass die genannten Mittel so beschaffen sind, dass sie gewisse der gewonnenen Rundfunkdaten als Datenelemente in die genannten Datenbelege einfügen.

6. System gemäss Anspruch 5, **dadurch gekennzeichnet, dass** die genannten Mittel so beschaffen sind, dass sie eine in den gewonnenen Rundfunkdaten enthaltene Rundfunksenderidentifizierung als Datenelement in die genannten Datenbelege einfügen.

7. System gemäss einem der Ansprüche 5 oder 6, **dadurch gekennzeichnet, dass** die Mobilendgeräte (2) jeweils ein mit dem Decoder (25) verbundenes Fehlerbestimmungsmodul (232) zum Bestimmen der Bitfehlerrate des vom Rundfunksender (13) empfangenen Rundfunksignals umfassen, und dass die genannten Mittel so beschaffen sind, dass sie die bestimmte Rundfunk-Bitfehlerrate als Datenelement in die genannten Datenbelege einfügen.

8. System gemäss einem der Ansprüche 1 bis 7, **dadurch gekennzeichnet, dass** die Mobilendgeräte (2) jeweils ein Qualitätsbestimmungsmodul (24) zum Bestimmen der Signalqualität der von Basisstationen (31) des Mobilfunknetzes (3) empfangenen Mobilfunksignale umfassen, und dass die genannten Mittel so beschaffen sind, dass sie Angaben über die bestimmte Mobilfunk-Signalqualität als Datenelemente in die genannten Datenbelege einfügen.

9. System gemäss einem der Ansprüche 1 bis 8, **dadurch gekennzeichnet, dass** die Mobilendgeräte (2) jeweils ein Feldstärkemessmodul (241) zum Messen der Feldstärke der von Basisstationen des Mobilfunknetzes (3) empfangenen Mobilfunksignale umfassen, und dass die genannten Mittel so beschaffen sind, dass sie gemessene Mobilfunk-Feldstärkewerte als Datenelemente in die genannten Datenbelege einfügen.

10. System gemäss einem der Ansprüche 1 bis 9, **dadurch gekennzeichnet, dass** die Mobilendgeräte (2) jeweils ein Fehlerbestimmungsmodul (242) zum Bestimmen der Bitfehlerrate der von Basisstationen des Mobilfunknetzes (3) empfangenen Mobilfunksignale umfassen, und dass die genannten Mittel so beschaffen sind, dass sie die gemessene Mobilfunk-Bitfehlerrate als Datenelement in die genannten Datenbelege einfügen.

11. System gemäss einem der Ansprüche 1 bis 10, **dadurch gekennzeichnet, dass** die Mobilendgeräte (2) jeweils ein Identifizierungsmodul (28, 202) mit einem darin gespeicherten Identifizierungsdatenelement umfassen, und dass die genannten Mittel so beschaffen sind, dass sie das Identifizierungsdatenelement in die genannten Datenbelege einfügen.

12. System gemäss einem der Ansprüche 1 bis 11, **dadurch gekennzeichnet, dass** die genannten Mittel so beschaffen sind, dass sie Datenelemente, deren Werte zum gleichen Zeitpunkt bestimmt werden, einander zugeordnet in die genannten Datenbelege einfügen.

13. Mobilendgerät (2) umfassend einen Rundfunkempfänger (21) zum Empfangen von Rundfunksignalen, die von einem Rundfunksender (13) unidirektional über eine Luftschnittstelle (12) ausgesendet werden, und ein Mobilfunkmodul (22) zur Kommunikation über ein Mobilfunknetz (3), **dadurch gekennzeichnet,**
**dass** das Mobilendgerät (2) Mittel zur Bereitstellung von Datenbelegen, deren Inhalte abhängig von den empfangenen Rundfunksignalen sind, umfasst, und
**dass** die genannten Mittel so beschaffen sind, dass sie die bereitgestellten Datenbelege dem Mobilfunkmodul (22) zur Übermittlung an den Datenspeicher (5) zuführen.

14. Mobilendgerät (2) gemäss Anspruch 13, **dadurch gekennzeichnet, dass** es ein Qualitätsbestimmungsmodul (23) zum Bestimmen der Signalqualität der vom Rundfunksender (13) empfangenen Rundfunksignale umfasst, und dass die genannten Mittel so beschaffen sind, dass sie Angaben über die bestimmte Rundfunk-Signalqualität als Datenelemente in die genannten Datenbelege einfügen.

15. Mobilendgerät (2) gemäss einem der Ansprüche 13 oder 14, **dadurch gekennzeichnet, dass** es ein Feldstärkemessmodul (231) zum Messen der Feldstärke der vom Rundfunksender (13) empfangenen Rundfunksignale umfasst, und dass die genannten Mittel so beschaffen sind, dass sie gemessene Rundfunk-Feldstärkewerte als Datenelemente in die genannten Datenbelege einfügen.

16. Mobilendgerät (2) gemäss einem der Ansprüche 13 bis 15, **dadurch gekennzeichnet, dass** es ein Positionsbestimmungsmodul (20) zum Bestimmen der aktuellen geografischen Position des Mobilendgeräts (2) umfasst, und dass die genannten Mittel so beschaffen sind, dass sie die bestimmte aktuelle geografische Position als Datenelement in die genannten Datenbelege einfügen.

17. Mobilendgerät (2) gemäss einem der Ansprüche 13 bis 16, **dadurch gekennzeichnet, dass** es einen mit dem Rundfunkempfänger (21) verbundenen Decoder (25) zum Gewinnen von in den vom Rundfunksender (13) empfangenen Rundfunksignalen enthaltenen Rundfunkdaten umfasst, und dass die genannten Mittel so beschaffen sind, dass sie gewisse der gewonnenen Rundfunkdaten als Datenelemente in die genannten Datenbelege einfügen.

18. Mobilendgerät (2) gemäss Anspruch 17, **dadurch gekennzeichnet, dass** die genannten Mittel so beschaffen sind, dass sie eine in den gewonnenen Rundfunkdaten enthaltene Rundfunksenderidentifizierung als Datenelement in die genannten Datenbelege einfügen.

19. Mobilendgerät (2) gemäss einem der Ansprüche 17 oder 18, **dadurch gekennzeichnet, dass** es ein mit dem Decoder (25) verbundenes Fehlerbestimmungsmodul (232) zum Bestimmen der Bitfehlerrate des vom Rundfunksender (13) empfangenen Rundfunksignals umfasst, und dass die genannten Mittel so beschaffen sind, dass sie die bestimmte Bitfehlerrate als Datenelement in die genannten Datenbelege einfügen.

20. Mobilendgerät (2) gemäss einem der Ansprüche 13 bis 19, **dadurch gekennzeichnet, dass** es ein Qualitätsbestimmungsmodul (24) zum Bestimmen der Signalqualität der von Basisstationen des Mobilfunknetzes (3) empfangenen Mobilfunksignale umfasst, und dass die genannten Mittel so beschaffen sind, dass sie Angaben über die bestimmte Mobilfunk-Signalqualität als Datenelemente in die genannten Datenbelege einfügen.

21. Mobilendgerät (2) gemäss einem der Ansprüche 13 bis 20, **dadurch gekennzeichnet, dass** es ein Feldstärkemessmodul (241) zum Messen der Feldstärke der von Basisstationen des Mobilfunknetzes (3) empfangenen Mobilfunksignale umfasst, und dass die genannten Mittel so beschaffen sind, dass sie gemessene Mobilfunk-Feldstärkewerte als Datenelemente in die genannten Datenbelege einfügen.

22. Mobilendgerät (2) gemäss einem der Ansprüche 13 bis 21, **dadurch gekennzeichnet, dass** es ein Fehlerbestimmungsmodul (242) zum Bestimmen der Bitfehlerrate der von Basisstationen des Mobilfunknetzes (3) empfangenen Mobilfunksignale umfasst, und dass die genannten Mittel so beschaffen sind, dass sie die gemessene Mobilfunk-Bitfehlerrate als Datenelement in die genannten Datenbelege einfügen.

23. Mobilendgerät (2) gemäss einem der Ansprüche 13 bis 22, **dadurch gekennzeichnet, dass** es ein Identifizierungsmodul (28, 202) mit einem darin gespeicherten Identifizierungsdatenelement umfasst, und dass die genannten Mittel so beschaffen sind, dass sie das Identifizierungsdatenelement in die genannten Datenbelege einfügen.

24. Mobilendgerät (2) gemäss einem der Ansprüche 13 bis 23, **dadurch gekennzeichnet, dass** die genannten Mittel so beschaffen sind, dass sie Datenelemente, deren Werte zum gleichen Zeitpunkt bestimmt werden, einander zugeordnet in die genannten Datenbelege einfügen.

## Geänderte Patentansprüche

### Geänderte Patentansprüche gemäss Regel 86(2) EPÜ.

**1.** Datenerfassungssystem, das mehrere Mobilengeräte (2) umfasst, die jeweils einen Rundfunkempfänger (21) zum Empfangen von Rundfunksignalen, die von einem Rundfunksender (13) unidirektional über eine Luftschnittstelle (12) ausgesendet werden, und ein Mobilfunkmodul (22) zur Kommunikation über ein Mobilfunknetz (3) umfasssen, wobei das System einen mit dem Mobilfunknetz (3) verbundenen Datenspeicher (5) umfasst, und wobei die Mobilendgeräte (2) jeweils Mittel umfassen zur Bereitstellung von Datenbelegen und zum Zuführen der bereitsgestellten Datenbelege zum Mobilfunkmodul (22) zur Übermittlung and den Datenspeicher (5), **dadurch gekennzeichnet,**
**dass** die Mobilendgeräte (2) jeweils ein Qualitätsbestimmungsmodul (23) zum Bestimmen der Signalqualität der vom Rundfunksender (13) empfangenen Rundfunksignale umfassen, und
das die genannten Mittel so beschaffen sind, dass sie Angaben über die bestimmte Rundfunk-Signalqualität als Datenelemente in die genannten Datenbelege einfügen.

**2.** System gemäss Anspruch 1, **dadurch gekennzeichnet, dass** die Mobilengeräte (2) jeweils ein Feldstärkemessmodul (231) zum Messen der Feldstärke der vom Rundfunksender (13) empfangenen Rundfunksignale umfassen, und dass die genannten Mittel so beschaffen sind, dass die gemessene Rundfunk-Feldstärkewerte als Datenelemente in die genannten Datenbelege einfügen.

**3.** System gemäss einem der Ansprüche 1 oder 2, **dadurch gekennzeichnet, dass** die Mobilendgeräte (2) jeweils ein Positionsbestimmungsmodul (20) zum Bestimmen der aktuellen geografischen Position des Mobilendgeräts (2) umfassen, und dass die genannten Mittel so beschaffen sind, dass sie die bestimmte aktuelle geografische Position als Datenelement in die genannten Datenbelege einfügen.

**4.** System gemäss einem der Ansprüche 1 bis 3, **dadurch gekennzeichnet, dass** die Mobilendgeräte (2) jeweils einen mit dem Rundfunkempfänger (21) verbundenen Decoder (25) zum Gewinnen von in den vom Rundfunksender (13) empfangenen Rundfunksignalen enthaltenen Rundfunkdaten umfassen, und dass die genannten Mittel so beschaffen sind, dass sie gewisse der gewonnenen Rundfunkdaten als Datenelemente in die genannten Datenbelege einfügen.

**5.** System gemäss Anspruch 4, **dadurch gekennzeichnet, dass** die genannten Mittel so beschaffen sind, dass sie eine in den gewonnenen Rundfunkdaten enthaltene Rundfunksenderidentifizierung als Datenelement in die genannten Datenbelege einfügen.

**6.** System gemäss einem der Ansprüche 4 oder 5, **dadurch gekennzeichnet, dass** die Mobilendgeräte (2) jeweils ein mit dem Decoder (25) verbundenes Fehlerbestimmungsmodul (232) zum Bestimmen der Bitfehlerrate des vom Rundfunksender (13) empfangenen Rundfunksignals umfassen, und dass die genannten Mittel so beschaffen sind, dass sie die bestimmte Rundfunk-Bitfehlerrate als Datenelement in die genannten Datenbelege einfügen.

**7.** System gemäss einem der Ansprüche 1 bis 6, **dadurch gekennzeichnet, dass** die Mobilendgeräte (2) jeweils ein Qualitätsbestimmungsmodul (24) zum Bestimmen der Signalqualität der von Basisstationen (31) des Mobilfunknetzes (3) empfangenen Mobilfunksignale umfassen, und dass die genannten Mittel so beschaffen sind, dass sie Angaben über die bestimmte Mobilfunk-Signalqualität als Datenelemente in die genannten Datenbelege einfügen.

**8.** System gemäss einem der Ansprüche 1 bis 7, **dadurch gekennzeichnet, dass** die Mobilendgeräte (2) jeweils ein Feldstärkemessmodul (241) zum Messen der Feldstärke der von Basisstationen des Mobilfunknetzes (3) empfangenen Mobilfunksignale umfassen, und dass die genannten Mittel so beschaffen sind, dass sie gemessene Mobilfunk-Feldstärkewerte als Datenelemente in die genannten Datenbelege einfügen.

**9.** System gemäss einem der Ansprüche 1 bis 8, **dadurch gekennzeichnet, dass** die Mobilendgeräte (2) jeweils ein Fehlerbestimmungsmodul (242) zum Bestimmen der Bitfehlerrate der von Basisstationen des Mobilfunknetzes (3) empfangenen Mobilfunksignale umfassen, und dass die genannten Mittel so beschaffen sind, dass sie die gemessene Mobilfunk-Bitfehlerrate als Datenelement in die genannten Datenbelege einfügen.

**10.** System gemäss einem der Ansprüche 1 bis 9, **dadurch gekennzeichnet, dass** die Mobilendgeräte (2) jeweils ein Identifizierungsmodul (28, 202) mit einem darin gespeicherten Identifizierungsdatenelement umfassen, und dass die genannten Mittel so beschaffen sind, dass sie das Identifizierungsdatenelement in die genannten Datenbelege einfügen.

**11.** System gemäss einem der Ansprüche 1 bis 10, **dadurch gekennzeichnet, dass** die genannten Mittel so beschaffen sind, dass sie Datenelemente, deren Werte zum gleichen Zeitpunkt bestimmt werden, einander zugeordnet in die genannten Datenbelege einfügen.

**12.** Mobilendgerät (2) umfassend einen Rundfunkempfänger (21) zum Empfangen von Rundfunksignalen, die von einem Rundfunksender (13) unidirektional über eine Luftschnittstelle (12) ausgesendet werden, ein Mobilfunkmodul (22) zur Kommunikation über ein Mobilfunknetz (3), und Mittel zur Bereitstellung von Datenbelegen und zum Zuführen der bereitgestellten Datenbelege zum Mobilfunkmodul (22) zur Übermittlung an einen zum Mobilendgerät (2) externen Datenspeicher (5), **dadurch gekennzeichnet,**
**dass** das Mobilendgerät (2) ein Qualitätsbestimmungsmodul (23) zum Bestimmen der Signalqualität der vom Rundfunksender (13) empfangenen Rundfunksignale umfasst, und
**dass** die genannten Mittel so beschaffen sind, dass sie Angaben über die bestimmte Rundfunk-Signalqualität als Datenelemente in die genannten Datenbelege einfügen.

**13.** Mobilendgerät (2) gemäss Anspruch 12, **dadurch gekennzeichnet, dass** es ein Feldstärkemessmodul (231) zum Messen der Feldstärke der vom Rundfunksender (13) empfangenen Rundfunksignale umfasst, und dass die genannten Mittel so beschaffen sind, dass sie gemessene Rundfunk-Feldstärkewerte als Datenelemente in die genannten Datenbelege einfügen.

**14.** Mobilendgerät (2) gemäss einem der Ansprüche 12 oder 13, **dadurch gekennzeichnet, dass** es ein Positionsbestimmungsmodul (20) zum Bestimmen der aktuellen geografischen Position des Mobilendgeräts (2) umfasst, und dass die genannten Mittel so beschaffen sind, dass sie die bestimmte aktuelle geografische Position als Datenelement in die genannten Datenbelege einfügen.

**15.** Mobilendgerät (2) gemäss einem der Ansprüche 12 bis 14, **dadurch gekennzeichnet, dass** es einen mit dem Rundfunkempfänger (21) verbundenen Decoder (25) zum Gewinnen von in den vom Rundfunksender (13) empfangenen Rundfunksignalen enthaltenen Rundfunkdaten umfasst, und dass die genannten Mittel so beschaffen sind, dass sie gewisse der gewonnenen Rundfunkdaten als Datenelemente in die genannten Datenbelege einfügen.

**16.** Mobilendgerät (2) gemäss Anspruch 15, **dadurch gekennzeichnet, dass** die genannten Mittel so beschaffen sind, dass sie eine in den gewonnenen Rundfunkdaten enthaltene Rundfunksenderidentifizierung als Datenelement in die genannten Datenbelege einfügen.

**17.** Mobilendgerät (2) gemäss einem der Ansprüche 15 oder 16, **dadurch gekennzeichnet, dass** es ein mit dem Decoder (25) verbundenes Fehlerbestimmungsmodul (232) zum Bestimmen der Bitfehlerrate des vom Rundfunksender (13) empfangenen Rundfunksignals umfasst, und dass die genannten Mittel so beschaffen sind, dass sie die bestimmte Bitfehlerrate als Datenelement in die genannten Datenbelege einfügen.

**18.** Mobilendgerät (2) gemäss einem der Ansprüche 12 bis 17, **dadurch gekennzeichnet, dass** es ein Qualitätsbestimmungsmodul (24) zum Bestimmen der Signalqualität der von Basisstationen des Mobilfunknetzes (3) empfangenen Mobilfunksignale umfasst, und dass die genannten Mittel so beschaffen sind, dass sie Angaben über die bestimmte Mobilfunk-Signalqualität als Datenelemente in die genannten Datenbelege einfügen.

**19.** Mobilendgerät (2) gemäss einem der Ansprüche 12 bis 18, **dadurch gekennzeichnet, dass** es ein Feldstärkemessmodul (241) zum Messen der Feldstärke der von Basisstationen des Mobilfunknetzes (3) empfangenen Mobilfunksignale umfasst, und dass die genannten Mittel so beschaffen sind, dass sie gemessene Mobilfunk-Feldstärkewerte als Datenelemente in die genannten Datenbelege einfügen.

**20.** Mobilendgerät (2) gemäss einem der Ansprüche 12 bis 19, **dadurch gekennzeichnet, dass** es ein Fehlerbestimmungsmodul (242) zum Bestimmen der Bitfehlerrate der von Basisstationen des Mobilfunknetzes (3) empfangenen Mobilfunksignale umfasst, und dass die genannten Mittel so beschaffen sind, dass sie die gemessene Mobilfunk-Bitfehlerrate als Datenelement in die genannten Datenbelege einfügen.

**21.** Mobilendgerät (2) gemäss einem der Ansprüche 12 bis 20, **dadurch gekennzeichnet, dass** es ein Identifizierungsmodul (28, 202) mit einem darin gespeicherten Identifizierungsdatenelement umfasst, und dass die genannten Mittel so beschaffen sind, dass sie das Identifizierungsdatenelement in die genannten Datenbelege einfügen.

**22.** Mobilendgerät (2) gemäss einem der Ansprüche 12 bis 21, **dadurch gekennzeichnet, dass** die genannten Mittel so beschaffen sind, dass sie Datenelemente, deren Werte zum gleichen Zeitpunkt bestimmt werden, einander zugeordnet in die genannten Datenbelege einfügen.
